# EUROPEAN PATENT APPLICATION

(11) **EP 2 476 466 A1**
(43) Date of publication of application: **18.07.2012**
(21) Application number: 10843706.2
(22) Date of filing: 03.07.2010
(51) Int. Cl.: A62D 1/00

(54) **CATALYTIC CHEMICAL COOLANT FOR HOT AEROSOL AND MAKING PROCESS THEREOF**

(30) Priority: 19.01.2010 CN 201010013619
(71) Applicant: Shaanxi J&R Fire Fighting Co., Ltd, Shaanxi 710075 (CN)
(72) Inventor: GUO, Hongbao, Shaanxi 710075 (CN); SONG, Ruiguang, Shaanxi 710075 (CN)
(74) Representative: Pidgeon, Robert John
(86) International application number: PCT/CN2010/074966
(87) International publication number: WO 2011/088666

(57) **Abstract**

The present invention relates to a catalytic coolant applied in thermal aerosol fire suppression apparatuses and processing method thereof. The coolant mainly comprises endothermic cooling material, catalytic additive, processing aid and bonding agent; compared to that in the prior art, the catalytic coolant prepared from appropriate materials at appropriate proportions has high strength, delivers good cooling effect and can reduce secondary impairment to the fire suppressant, reduce or even eliminate toxic gases in the products of the fire suppressant and enhance environmental safety.

## Description

### Field of the Invention

The present invention belongs to the technical field of gas fire suppression in the field of fire control technology, and relates to a coolant for fume cooling during fire suppression with thermal aerosol and a preparation method thereof, especially a catalytic coolant with excellent cooling effect and a preparation method thereof.

### Background of the Invention

The initiator of thermal aerosol fire suppressant is a kind of pyrotechnic composition, which has strong combustion reaction and releases a great deal of heat when it releases thermal aerosol fire suppressant. To avoid secondary fire, the fire suppressant must be cooled down. In the prior art, common cooling methods include internal chemical cooling, external chemical cooling, external physical cooling with cooling medium or low-temperature source, external physical cooling by means of structural design, and external physical cooling with physical coolant, etc.

In Patent Application No. CN1593695A, a method for external physical cooling by means of structural design is disclosed, and the method utilizes fire-retardant baffles and boxes to block and insulate the flames and heat from the thermal aerosol fire suppressant; however, the apparatus is too big, and the hazard of secondary fire still exists.

In Patent Application No. CN101156981A, a method for cooling the fire suppressant by means of the endothermic effect with high-pressure carbon dioxide releasing is disclosed. However, the method has the following drawbacks: it is difficult to synchronize the operation of the low-temperature source with the release of thermal aerosol fire suppressant; as a result, in the late stage of release of the fire suppressant, the fire suppressant may be released without cooling, and therefore the flames and hot residue may spurt out and cause secondary fire; in addition, the apparatus is more composite, and the maintenance cost is higher.

In Patent Application No. CN1600391A, an external chemical cooling method that utilizes cooling cakes with 4-8 mm pores produced by bonding the coolant at different mix ratios with phenolic aldehyde as raw material is disclosed. With the thermal aerosol cooling method, cooling cakes produced at different mix ratios are loaded in four layers in the fire suppression apparatus. Wherein, the first layer and fourth layer are filled with cooling cakes mainly composed of calcium sulfate, zeolite, aluminum oxide and calcium carbonate; the second layer is filled with cooling cakes mainly composed of potassium carbonate, sodium carbonate, calcium carbonate, potassium bicarbonate and sodium bicarbonate; the third layer is filled with cooling cakes mainly composed of potassium carbonate, sodium carbonate, calcium carbonate, potassium bicarbonate, sodium bicarbonate, aluminum hydroxide, zinc hydroxide and copper hydroxide. However, the coolant has the following drawbacks: the coolant may produce toxic SO₂ gas at high temperature, and therefore is not friendly to the environment; the cooling cakes have low strength and poor vibration strength, and may break up easily; the cooling effect is unsatisfactory; a great deal of alkali metal compound is produced during endothermic decomposition, and therefore causes secondary impairment to the fire suppressant.

A known thermal aerosol coolant is disclosed in patent RD 208627 (1997.08.10), and the thermal aerosol coolant is made of the following materials: nitrocellulose, plasticizer, stabilizer, catalyzer, processing aid and heat absorbent: 25-45% basic magnesium carbonate or ammonium oxalate or basic magnesium phosphate. The drawbacks of the coolant lie in: the content of endothermic cooling material is low, and therefore the cooling effect is not satisfactory; the coolant has low strength and poor vibration strength, and is easy to break up and jam the cooling channel, causing explosion hazard when the fire suppressant is released; the constituents such as nitrocellulose, plasticizer and stabilizer may release toxic gases such as CO, NOₓ, NH₃ and HCN at high temperature; a great deal of water is released when the basic carbonate is decomposed, and form viscous electrical-conductive liquid membrane on the protected substance, causing secondary impairment.

Other thermal aerosol coolants with similar properties include the thermal aerosol coolants disclosed in patent Application No. RU 2120318 (1998.10.20), RU 2166975 (2001.05.20), RU 2142306 (1999.12.10), RU 2142835 (1999.12.20), PCT/RU 2004/000342 (2004.09.03, Chinese Patent Application No. CN 1845770A), etc.

Though the coolants above-described have different features, all of them can't ensure overall high performance of the fire suppressant in terms of high fire suppression efficacy, control of toxic gases, reduction of secondary impairment, and cooling effect, etc.

### Summary of the Invention

In view of the drawbacks in the prior art, the present invention provides a kind of coolant that can not only cool down thermal aerosol fire suppressant to the safe release temperature effectively but also attain the following objectives, and a preparation method thereof:
1) The main raw material is a cooling material that can absorb a large quantity of heat at low temperature and decompose, so as to improve the cooling efficiency;
2) The resultant moisture and the constituent that produces a moisture absorptive product after endothermic reaction can be reduced, so as to decrease the probability of secondary impairment to the fire suppressant;
3) The catalytic additive can be selected, so as to reduce and even eliminate the content of toxic gases such as CO, NOₓ, NH₃, HCN in the product of fire suppressant, and enhance environmental safety;
4) With the catalytic effect of the decomposition products of the coolant and the catalytic additive to the fire suppressant, the content of active constituents in the fire suppressant can be increased, and thereby the fire suppression efficacy of the thermal aerosol fire suppressant can be improved;
5) The constituents such as organic bonding agent, inorganic bonding agent, endothermic cooling material, catalytic additive and surface coating agent can be combined appropriately, to increase the strength and surface smoothness of the coolant, and improve the vibration strength of the coolant.

The ideal and technical solution of the present invention will be described as following:

The catalytic thermo-chemical coolant for thermal aerosol in the present invention comprises endothermic cooling material, catalytic additive, processing aid and bonding agent, characterized in that the constituent contents of the chemical coolant are:
Endothermic cooling material: 50~95 wt.%
Catalytic additives: 1~30 wt.%
Processing aids: 0.5~5 wt.%
Bonding agent: 2~6 wt.%

The endothermic cooling material is manganese carbonate, manganous oxalate, manganous phosphate, potassium manganate, potassium permanganate, or a composite endothermic cooling material composed of manganese carbonate and supplementary coolant, the supplementary coolant is carbonate, basic carbonate and oxalate of the metal in group I, group II or transition group, and in the composite endothermic cooling material, the proportion of manganese carbonate is not less than 50 wt.%; the catalytic additive is metal oxide or hydroxide; the processing aid is stearate, graphite, or mixture thereof; the bonding agent is a composite solution of alkali metal silicate and water-soluble high polymer.

The catalytic chemical coolant for thermal aerosol in the present invention further comprises a surface coating agent, which is made of methylol or hydroxyethyl cellulose film material, and accounts for 0~2 wt.%.

In the catalytic chemical coolant for thermal aerosol in the present invention, the endothermic cooling material is preferably manganese carbonate; the catalytic additive is preferably an oxide of copper, zinc, iron, magnesiu, or nickel, and/or a hydroxide of copper, zinc, iron, magnesium or nickel.

In the catalytic chemical coolant for thermal aerosol in the present invention, the bonding agent is preferably a composite solution prepared from sodium silicate and polyvinyl alcohol or prepared from sodium silicate and cellulose potassium.

The constituent contents of the catalytic chemical coolant for thermal aerosol in the present invention can be determined according to the technical requirements and functional practicability within the protective scope.

The catalytic chemical coolant for thermal aerosol in the present invention can be in lump, tablet, pellet, or strip and cellular shape, and can be used separately or in combination with a physical coolant, wherein the catalytic chemical coolant for thermal aerosol in tablet shape can be prepared through the following steps:
Step 1: Weigh manganese carbonate or manganese carbonate, zinc oxide, ferric oxide and basic magnesium carbonate at appropriate proportions and then feed them into a high-speed mixing pelletizer, and agitate and mix them for 5~25 mins. at high speed;
Step 2: Add water solution prepared from sodium silicate and polyvinyl alcohol in appropriate weight, agitate for 2~10 mins. at low speed, and then pelletize for 5~25 mins. at high-speed shear agitation;
Step 3: Dry the obtained mixture in an oven at 50°C~80 °C for 2~6 h, take out, load into a tank mixer, add zinc stearate in appropriate weight, and agitate for 3~10 mins.;
Step 4: Feed the mixture into a rotary tablet machine, and press the mixture into tablets at 100~300 MPa pressure with a non-penetrating die;
Step 5: Feed the tablets into a water-chestnut sugar coating machine, and coat the tablets in hydroxyethyl cellulose solution in appropriate weight under the conditions of 50~150 °C and 20~50 r/mins.

The catalytic chemical coolant for thermal aerosol in nodular shape can be prepared through the following steps:
Step 1: Weigh manganese carbonate, zinc oxide and basic magnesium carbonate at appropriate proportions and then feed them into a high-speed mixing pelletizer, and agitate and mix them for 5~25mins. at high speed;
Step 2: Feed the obtained mixture into a water-chestnut pelletizer, add water solution prepared from sodium silicate and polyvinyl alcohol in appropriate weight, and produce pellets under the conditions of 80~120 °C and 20~50 r/mins.;
Step 3: After the material is produced into pellets in approx. 10 mm diameter, coat the pellets in hydroxyethyl cellulose solution in appropriate weight.

The catalytic chemical coolant for thermal aerosol in strip shape can be prepared through the following steps:
Step 1: Weigh manganese carbonate, zinc oxide and basic magnesium carbonate at appropriate proportions and then feed them into a high-speed mixing pelletizer, and agitate and mix them for 5~25 mins. at high speed;
Step 2: Add water solution prepared from sodium silicate and polyvinyl alcohol in appropriate weight, agitate for 2~10 mins. at a low speed, and then pelletize for 5~15 mins. at high-speed shear agitation;
Step 3: Feed the obtained particles immediately into a extruding machine, and extrude the particles into strips in 4~10 mm diameter, with 2~8 holes in 1~4 mm diameter in each strip, at 60~100 Mpa pressure;
Step 4: Cut the strips into cylinders in 4~10 mm height, and dry the cylinders in an oven at 40~80 °C for 2~6h, and then take out the cylinders.

Compared to other similar coolants, the catalytic chemical coolant for thermal aerosol protected by the present invention has the following obvious benefits:
1. Manganese carbonate or other permanganate is preferred as the endothermic cooling material, and metal oxide or hydroxide such as zinc oxide or zinc hydroxide is preferred as the catalytic additive.

Manganese carbonate has excellent endothermic cooling effect, it can decompose completely at 500 °C and absorb heat up to 546 J/g. The metal oxides produced from decomposition, such as manganese oxide and zinc oxide, work together to reduce or even eliminate toxic gases produced from the fire suppressant such as CO, NOₓ, NH₃ and HCN by catalytic oxidation or decomposition, and thereby reduce toxicity. at the same time, above-described substances are coupled with the solid particles in the fire suppressant when they come in contact with the fire suppressant, and thereby delivers significant catalytic effect during fire suppression, and improve fire suppression efficacy of the fire suppressant. Up to now, no report on using manganese carbonate or manganous oxalate, manganous phosphate and potassium manganate as main endothermic cooling material is seen yet.
2. A composite solution prepared from alkali metals silicate and water-soluble high polymer is preferred as the bonding agent.

The composite bonding agent overcomes the drawbacks of the composition system with single inorganic bonding agent, such as high brittleness, low ductility, poor heat resistance, and poor vibration strength. The combined material will have high density and high strength even though a small amount of the composite bonding agent is added.
3. A methylol or hydroxyethyl cellulose film material is preferred as the surface coating agent.

The surface coating agent improves the surface smoothness of the composition system and further increases the strength, wear resistance, and vibration resistance of the composition system, and prevents the coolant from breaking and spilling out of the fire suppression apparatus in the transportation process.
4. Since the content of element H in the composition system is low, only a small amount of moisture is produced in the reaction; in addition, the decomposition product of the composition doesn't contain any substance that tends to absorb moisture and is highly soluble, the product will not couple with the moisture in the fire suppressant, environment and itself, therefore will not form viscous electrical-conductive liquid film (droplets); therefore, the corrosion is decreased and secondary impairment to the fire suppressant is reduced or will not increase. In addition, the composition system doesn't contain element N, so it will not produce toxic gases such as NOₓ, NH₃ or HCN, which increase the toxicity of the fire suppressant.
5. The composition can be prepared into lump, tablet, pellet or strip and cellular shape through a pelletizing, die pressing or extrusion process, and can be used separately or in combination with a physical coolant.

The catalytic chemical coolant for thermal aerosol in the present invention can achieve the following effects at the same time: high cooling efficiency, essentially no moisture and moisture absorptive product, and can reduce or doesn't increase secondary impairment to the fire suppressant; reduce the toxicity of the fire suppressant by means of catalytic oxidation, and enhance environmental safety; enhance the fire suppression efficacy of the fire suppressant by increasing the content of active constituent in the fire suppressant and significant catalytic effect; increase the strength and surface smoothness and enhance the vibration resistance of the coolant by combination of organic/inorganic bonding agent and surface treatment of coating agent.

### Detailed Description of the Embodiments

### Embodiment 1

Prepare coolant as following proportions:

| | |
|---|---|
| Manganese carbonate | 80 wt.% |
| Zinc oxide | 5 wt.% |
| Ferric oxide | 5 wt.% |
| Basic magnesium carbonate | 5 wt.% |
| Sodium silicate | 2.5 wt.% |
| Polyvinyl alcohol | 1 wt.% |
| Hydroxyethyl cellulose | 1 wt.% |
| Zinc stearate | 0.5 wt.% |

The process of preparing the coolant is as below: weigh manganese carbonate, zinc oxide, ferric oxide and basic magnesium carbonate at appropriate proportions, feed them into a high-speed mixing pelletizer, agitate and mix for 15 mins. at a high-speed; add water solution prepared from sodium silicate and polyvinyl alcohol in appropriate weight, agitate for 5 mins. at low speed, and then pelletize for 10 mins. at high-speed shear agitation; feed the obtained mixture into an oven and dry for 4 h at 60 °C, take out the mixture, feed it into a tank mixer, add zinc stearate in appropriate weight, and agitate for 5 mins.; feed the mixture into a rotary tablet machine, and press the mixture into tablets in 8 mm diameter at 200 MPa pressure with a non-penetrating die; feed the obtained tablets into a water-chestnut sugar coating machine, and coat the tablets in hydroxyethyl cellulose solution in appropriate weight under the conditions of 100°C and 30 r/mins.

Feed 200g coolant tablets obtained through above process into a generator that contains 100 g S-type thermal aerosol generating agent, and load the generator into a 1 m³ fire suppression test chamber, to test fire suppression of normal heptane in an oil tray in 100 mm diameter; feed 4 kg coolant tablets obtained through above process into a generator that contains 2 kg S-type thermal aerosol generating agent, and load the generator into a 20 m³ fire suppression test chamber to test fire suppression by spraying in cold state, and measure the gas constituents of the fire suppressant after spraying and the fire endurance of an ATX for ordinary desktop PC in the fire suppressant. The test result is shown in the attached table.

### Embodiment 2

Prepare coolant as following proportions:

| | |
|---|---|
| Manganese carbonate: | 95 wt.% |
| Sodium silicate: | 2.5 wt.% |
| Polyvinyl alcohol: | 1 wt.% |
| Hydroxyethyl cellulose: | 1 wt.% |
| Graphite: | 0.5 wt.% |

The process of preparing the coolant is as below: weigh manganese carbonate in appropriate amount, feed it into a high-speed mixing pelletizer, add water solution prepared from sodium silicate and polyvinyl alcohol in appropriate weight, agitate for 5 mins. at low speed, and then pelletize for 10 mins. at high-speed shear agitation; feed the obtained mixture into an oven and dry for 4 h at 60 °C, take out the mixture, feed it into a tank mixer, add zinc stearate in appropriate weight, and agitate for 5 mins.; feed the mixture into a rotary tablet machine, and press the mixture into tablets in 8 mm diameter at 200 MPa pressure with a non-penetrating die; feed the obtained tablets into a water-chestnut sugar coating machine, and coat the tablets in hydroxyethyl cellulose solution in appropriate weight under the conditions of 100 °C and 30 r/mins.

Test the obtained coolant tablets as described in embodiment 1. The test result is shown in the attached table.

### Embodiment 3

Prepare coolant as following proportions:

| | |
|---|---|
| Manganese carbonate: | 50 wt.% |
| Zinc oxide: | 15 wt.% |
| Copper oxide: | 15 wt.% |
| Basic magnesium carbonate: | 15 wt.% |
| Sodium silicate: | 2.5 wt.% |
| Polyvinyl alcohol: | 1 wt.% |
| Hydroxyethyl cellulose: | 1 wt.% |
| Zinc stearate: | 0.5 wt.% |

The process of preparing the coolant is as below: weigh manganese carbonate, zinc oxide, ferric oxide and basic magnesium carbonate at appropriate proportions, feed them into a high-speed mixing pelletizer, agitate and mix for 15 mins. at high-speed; add water solution prepared from sodium silicate and polyvinyl alcohol in appropriate weight, agitate for 5 mins. at low speed, and then pelletize for 10 mins. at high-speed shear agitation; feed the obtained mixture into an oven and dry for 4h at 60°C, take out the mixture, feed it into a tank mixer, add zinc stearate in appropriate weight, and agitate for 5 mins.; feed the mixture into a rotary tablet machine, and press the mixture into tablets in 8 mm diameter at 200 MPa pressure with a non-penetrating die; feed the obtained tablets into a water-chestnut sugar coating machine, and coat the tablets in hydroxyethyl cellulose solution in appropriate weight under the conditions of 100 °C and 30 r/mins.

Test the obtained coolant tablets as described in embodiment 1. The test result is shown in the attached table.

### Embodiment 4

Prepare coolant as following proportions:

| | |
|---|---|
| Manganese carbonate: | 75 wt.% |
| Zinc oxide: | 12 wt.% |
| Basic zinc carbonate: | 8 wt.% |
| Sodium silicate: | 3 wt.% |
| Polyvinyl alcohol: | 1 wt.% |
| Hydroxyethyl cellulose: | 1 wt.% |

The process of preparing the coolant is as below: weigh manganese carbonate, zinc oxide and basic magnesium carbonate at appropriate proportions, feed them into a high speed mixing pelletizer, agitate and mix for 15 mins. at high speed; feed the obtained mixture into a water-chestnut pelletizer, add water solution prepared from sodium silicate and polyvinyl alcohol in appropriate weight and pelletize the mixture into pellets in approx. 10 mm diameter under the conditions of 100 °C and 30 r/mins., and then coat the pellets in hydroxyethyl cellulose solution in appropriate weight.

Test the obtained coolant pellets as described in embodiment 1. The test result is shown in the attached table.

### Embodiment 5

Prepare coolant as following proportions:

| | |
|---|---|
| Manganese carbonate: | 80 wt.% |
| Zinc oxide: | 8 wt.% |
| Basic magnesium carbonate: | 6 wt.% |
| Sodium silicate: | 4 wt.% |
| Polyvinyl alcohol: | 1.5 wt.% |
| Magnesium stearate: | 0.5 wt.% |

The process of preparing the coolant is as below: weigh manganese carbonate, zinc oxide and basic magnesium carbonate at appropriate proportions, feed them into a high speed mixing pelletizer, agitate and mix for 15 mins. at high speed; add water solution prepared from sodium silicate and polyvinyl alcohol in appropriate weight, agitate for 5 mins. at low speed, and then pelletize for 10 mins. at high-speed shear agitation; feed the obtained particles into an extruding machine and extrude the particles into strips in 8 mm diameter, with 4 holes in 1 mm diameter in each strip, at 80 MPa pressure, and then cut the strips into cylinders in 8 mm height; dry the cylinders in an oven for 4 h at 60 °C, and then take them out.

Test the obtained cylindrical and cellular coolant as described in embodiment 1. The test result is shown in the attached table 1.

**Table 1: Comparison of Ratios of Constituents and Test Result**

| Constituent | | Content of Constituent (wt.%) | | | | | | | | | | | | Basic Magnesium Carbonate Coolant |
|---|---|---|---|---|---|---|---|---|---|---|---|---|---|---|
| | | 1 | 2 | 3 | 4 | 5 | 6 | 7 | 8 | 9 | 10 | 11 | 12 | |
| **Endothermic cooling materials** | | | | | | | | | | | | | | |
| Manganese carbonate | | 80 | 95 | 50 | 75 | 80 | 80 | 60 | 65 | 70 | 90 | 85 | 75 | |
| Basic magnesium carbonate | | 5 | | 15 | | 6 | | | | 10 | | | | 98 |
| Basic zinc carbonate | | | | | 8 | | | 20 | 10 | 6 | | | 10 | |
| Calcium carbonate | | | | | | | 10 | | 5 | | 5 | | | |
| **Catalytic additives** | | | | | | | | | | | | | | |
| Zinc oxide | | 5 | | 15 | 12 | 8 | | | | 9 | | | | |
| Ferric oxide | | 5 | | | | | | 8 | | | | | | |
| Magnesium oxide | | | | | | | 5 | | 15 | | | | | |
| Copper oxide | | | | 15 | | | | 7 | | | | | | |
| Ferric hydroxide | | | | | | | | | | | | 10 | | |
| Zinc hydroxide | | | | | | | | | | | | | 10 | |
| **Processing aids** | | | | | | | | | | | | | | |
| Zinc stearate | | 0.5 | | 0.5 | | | 0.5 | | 1 | 1 | | | 1 | |
| Magnesium stearate | | | | | | 0.5 | | | | | 1 | 1 | | |
| Graphite | | | 0.5 | | | | | 0.5 | | | | | | |
| **Bonding agents** | | | | | | | | | | | | | | |
| Sodium silicate | | 2.5 | 2.5 | 2.5 | 3 | 4 | 2.5 | 3 | 2 | 3 | 3 | 1.5 | 2.5 | 2 |
| Polyvinyl alcohol | | 1 | 1 | 1 | 1 | 1.5 | | | | 1 | 0.5 | 1.5 | 1.5 | |
| Cellulose potassium | | | | | | | 1 | 1 | 1 | | | | | |
| **Surface coating agents** | | | | | | | | | | | | | | |
| Methylol cellulose | | | | | | | | 0.5 | 1 | | 0.5 | | | |
| Hydroxyethyl cellulose | | 1 | 1 | 1 | 1 | | 1 | | | 1 | | 1 | | |
| Comparison of Test Result | | | | | | | | | | | | | | |
| Temperature at jet orifice of generator (°C) | | 187 | 163 | 246 | 212 | 152 | 197 | 214 | 257 | 221 | 176 | 203 | 188 | 387 |
| Concentration of toxic gas (ppm) | CO | **3067** | **2652** | **4329** | **3604** | **2437** | **2667** | **3852** | **4336** | **3779** | **2543** | **2833** | **3123** | **8963** |
| | NO_{X} | 0 | 12 | 0 | 5 | 0 | 0 | 0 | 0 | 0 | 14 | 0 | 0 | 56 |
| | NH₃, HCN, SO_{X} | 0 | 0 | 0 | 0 | 0 | 0 | 0 | 0 | 0 | 0 | 0 | 0 | 0 |
| Fire suppression duration (s) | | 37 | 53 | 61 | 38 | 33 | 45 | 63 | 67 | 58 | 41 | 35 | 42 | Not extinguished |
| Fire endurance of ATX power supply unit | | >2h | >2h | >2h | >2h | >2h | >2h | >2h | >2h | >2h | >2h | >2h | >2h | 15 mins |

Industrial Application of the Present Invention The thermal aerosol fire suppressant cooled with the coolant in the present invention can be used effectively to suppress fire in enclosed spaces and partially occupied spaces in buildings with occupants.

The advantages of the coolant in the present invention include:
High cooling efficiency for thermal aerosol fire suppressant;
High fire suppression efficacy of thermal aerosol fire suppressant;
High strength and surface smoothness;
Highly friendly to the environment; easy and safe to produce.

## Claims

1. A catalytic chemical coolant for thermal aerosol, **characterized in that** the catalytic chemical coolant comprises endothermic cooling material, catalytic additive, processing aid and bonding agent, wherein the constituent contents of the chemical coolant are:
endothermic cooling material: 50~95 wt.%
catalytic additive: 1~30 wt.%
processing aid: 0.5~5 wt.%
bonding agent: 2~6 wt.%
the endothermic cooling material is manganese carbonate, manganous oxalate, manganous phosphate, potassium manganate, potassium permanganate, or a composite endothermic cooling material composed of manganese carbonate and supplementary coolant, the supplementary coolant is carbonate, basic carbonate and oxalate of the metal in group I, group II or transition group, and in the composite endothermic cooling material, the proportion of manganese carbonate is not less than 50 wt.%; the catalytic additive is metal oxide or hydroxide; the processing aid is stearate, graphite, or mixture thereof; the bonding agent is a composite solution of alkali metal silicate and water-soluble high polymer.

2. The catalytic chemical coolant for thermal aerosol according to claim 1, **characterized in that** catalytic chemical coolant further comprises a surface coating agent, which is made of methylol or hydroxyethyl cellulose film material, and accounts for 0~2 wt.%.

3. The catalytic chemical coolant for thermal aerosol according to claim 1, **characterized in that** the endothermic cooling material is manganese carbonate; the catalytic additive is an oxide of copper, zinc, iron, magnesium or nickel, and/or a hydroxide of copper, zinc, iron, magnesium or nickel.

4. The catalytic chemical coolant for thermal aerosol according to claim 1, **characterized in that** the bonding agent is a composite solution composed of sodium silicate and polyvinyl alcohol or a composite solution composed of sodium silicate and cellulose potassium.

5. The catalytic chemical coolant for thermal aerosol according to claim 1, **characterized in that** the catalytic chemical coolant comprises:
| | |
|---|---|
| manganese carbonate: | 80 wt.% |
| zinc oxide: | 5 wt.% |
| ferric oxide: | 5 wt.% |
| basic magnesium carbonate: | 5 wt.% |
| sodium silicate: | 2.5 wt.% |
| polyvinyl alcohol: | 1 wt.% |
| hydroxyethyl cellulose: | 1 wt.% |
| zinc stearate: | 0.5 wt.%. |

6. The catalytic chemical coolant for thermal aerosol according to claim 1, **characterized in that** the catalytic chemical coolant comprises:
| | |
|---|---|
| manganese carbonate: | 95 wt.% |
| sodium silicate: | 2.5 wt.% |
| polyvinyl alcohol: | 1 wt.% |
| hydroxyethyl cellulose: | 1 wt.% |
| graphite: | 0.5 wt.%. |

7. The catalytic chemical coolant for thermal aerosol according to claim 1, **characterized in that** the catalytic chemical coolant comprises:
| | |
|---|---|
| manganese carbonate: | 50 wt.% |
| zinc oxide: | 15 wt.% |
| copper oxide: | 15 wt.% |
| basic magnesium carbonate: | 15 wt.% |
| sodium silicate: | 2.5 wt.% |
| polyvinyl alcohol: | 1 wt.% |
| hydroxyethyl cellulose: | 1 wt.% |
| zinc stearate: | 0.5 wt.%. |

8. The catalytic chemical coolant for thermal aerosol according to claim 2, **characterized in that** the catalytic chemical coolant comprises:
| | |
|---|---|
| manganese carbonate: | 75 wt.% |
| zinc oxide: | 12 wt.% |
| basic zinc carbonate: | 8 wt.% |
| sodium silicate: | 3 wt.% |
| polyvinyl alcohol: | 1 wt.% |
| hydroxyethyl cellulose: | 1 wt.%. |

9. The catalytic chemical coolant for thermal aerosol according to claim 1, **characterized in that** the catalytic chemical coolant comprises:
| | |
|---|---|
| manganese carbonate: | 80 wt.% |
| zinc oxide: | 8 wt.% |
| basic magnesium carbonate: | 6 wt.% |
| sodium silicate: | 4 wt.% |
| polyvinyl alcohol: | 1.5 wt.% |
| magnesium stearate: | 0.5 wt.%. |

10. The catalytic chemical coolant for thermal aerosol according to any of claims 1-9, **characterized in that** the chemical coolant is in lump, tablet, pellet, strip or cellular shape.

11. A preparation method of the catalytic chemical coolant for thermal aerosol according to claim 10, **characterized in that** the preparation steps for the coolant in tablet shape comprise:
step 1: weighing manganese carbonate or manganese carbonate, zinc oxide, ferric oxide and basic magnesium carbonate at appropriate proportions and then feeding them into a high-speed mixing pelletizer, agitating and mixing for 5~25 mins. at high speed;
step 2: adding water solution prepared from sodium silicate and polyvinyl alcohol in appropriate weight, agitating for 2~10 mins. at low speed, and then pelletizing for 5~25 mins. at high-speed shear agitation;
step 3: drying the obtained mixture in an oven at 50°C~80 °C for 2~6 h, taking out, loading into a tank mixer, adding zinc stearate in appropriate weight and agitating for 3~10 mins.;
step 4: feeding the mixture into a rotary tablet machine and pressing the mixture into tablets at 100~300 MPa pressure with a non-penetrating die;
step 5: feeding the tablets into a water-chestnut sugar coating machine and coating the tablets in hydroxyethyl cellulose solution in appropriate weight under the conditions of 50~150 °C and 20~50 r/mins.

12. The preparation method of the catalytic chemical coolant for thermal aerosol according to claim 10, **characterized in that** the preparation steps for the coolant in pellet shape comprise:
step 1: weighing manganese carbonate, zinc oxide and basic magnesium carbonate at appropriate proportions and then feeding them into a high-speed mixing pelletizer, agitating and mixing for 5~25 mins. at high speed;
step 2: feeding the obtained mixture into a water-chestnut pelletizer, adding water solution prepared from sodium silicate and polyvinyl alcohol in appropriate weight, and producing pellets under the conditions of 80~120 °C and 20~50 r/mins.;
step 3: after the material is produced into pellets in approx. 10mm diameter, coating the pellets in hydroxyethyl cellulose solution in appropriate weight.

13. The preparation method of the catalytic chemical coolant for thermal aerosol according to claim 10, **characterized in that** the preparation steps for the coolant in strip and cellular shape comprise:
step 1: weighing manganese carbonate, zinc oxide and basic magnesium carbonate at appropriate proportions and then feeding them into a high-speed mixing pelletizer, agitating and mixing for 5~25 mins. at high speed;
step 2: adding water solution prepared from sodium silicate and polyvinyl alcohol in appropriate weight, agitating for 2~10 mins. at low speed, and then pelletizing for 5~15 mins. at high-speed shear agitation;
step 3: feeding the obtained particles immediately into an extruding machine, and extruding the particles into strips in 4~10 mm diameter, with 2~8 holes in 1~4 mm diameter in each strip, at 3~80 MPa pressure;
step 4: cutting the strips into cylinders in 4~10mm height, and drying the cylinders in an oven at 40~80 °C for 2~6 h, and then taking out the cylinders.
